# EUROPÄISCHE PATENTSCHRIFT

(11) **EP 2 343 251 B1**
(45) Veröffentlichungstag und Bekanntmachung des Hinweises auf die Patenterteilung: **26.09.2012**
(21) Anmeldenummer: 10196008.6
(22) Anmeldetag: 20.12.2010
(51) Int. Cl.: B65G 13/07, B65G 39/12

(54) **Vorrichtung mit Rotationselement, insbesondere mit Rolle**
Device with rotation element, in particular with roller
Dispositif doté d'un élément de rotation, notamment doté d'un rouleau

(30) Priorität: 12.01.2010 DE 102010000803
(43) Veröffentlichungstag der Anmeldung: 13.07.2011
(73) Patentinhaber: Dürr Systems GmbH, 74321 Bietigheim-Bissingen (DE)
(72) Erfinder: Federmann, Andreas, 70563, Stuttgart (DE); Wichelmann, Thilo, 52152, Simmerath (DE)
(74) Vertreter: Gauss, Nikolai

(56) Entgegenhaltungen:
- EP-A1- 0 013 628
- EP-A1- 0 177 002
- WO-A1-84/03685
- CN-Y- 2 657 344
- DE-A1- 2 324 256
- GB-A- 445 445
- GB-A- 796 061
- GB-A- 2 095 193
- JP-U- 54 143 581
- JP-U- 61 038 673
- US-A- 1 644 611
- US-A- 1 919 495
- US-A- 2 033 074
- US-A- 3 140 130
- US-A- 3 343 893
- US-A- 4 311 226
- US-A- 4 421 224
- US-A- 5 875 878

## Beschreibung

Die Erfindung betrifft eine Vorrichtung, insbesondere eine Fördervorrichtung, mit wenigstens einem Rotationselement, insbesondere mit einem als Rolle ausgebildeten Rotationselement, und mit einer das Rotationselement tragenden, drehbeweglichen Welle, welche mit einem ersten Lagerabschnitt in einem ersten Wellenlager aufgenommen ist und die mit einem zweiten Wellenlager in einem zweiten Wellenlager gehalten ist, wobei der erste Lagerabschnitt der Wellen in dem ersten Wellenlager derart verlagerbar ist, dass der zweite Lagerabschnitt von dem zweiten Wellenlager freigegeben wird.

Eine derartige Vorrichtung ist aus der GB 796,061 A und der US 1,919,495 A bekannt.

Derartige Vorrichtungen werden in industriellen Produktionsanlagen, insbesondere in Lackier- oder Reinigungsanlagen eingesetzt. Mit ihnen können z. B. Körbe mit Produktionsgegenständen oder auch Rahmen bzw. Gerüste, an denen die Produktionsgegenstände aufgenommen sind, durch eine Anlage bewegt werden. Insbesondere lässt sich damit ein Skid mit einer Kraftfahrzeugkarosse bewegen. Die Körbe, Rahmen oder Gerüste werden hier auf Rotationselementen in Form von Rollen verlagert. In diesen Vorrichtungen gibt es im Regelfall eine große Anzahl von Wellen, an denen eine oder mehrere Rollen aufgenommen sind. Diese Rollen sind häufig großen mechanischen Belastungen sowie Verschmutzung und Verschleiß ausgesetzt. Es ist deshalb erforderlich, dass die Rollen von Zeit zu Zeit gereinigt, repariert und ersetzt werden. Damit die Rollen ausgewechselt und eingebaut werden können, muss eine Produktionsanlage stillgelegt werden.

Für den Aus- und Einbau von Rotationselementen in Vorrichtungen der eingangs genannten Art ist es erforderlich, Antriebseinheiten für Wellen mit Rotationselementen durch Abnahme von Verkleidungsteilen freizulegen und Getriebeeinheiten sowie Wellen zu demontieren. Die Demontage einer Welle ist u.U. zeitintensiv. Die Demontage muss ggf. von spezialisiertem Personal durchgeführt werden. Sie erfordert üblicherweise eine Arbeitszeit, die zwischen zwei und vier Stunden liegt. Wartung, Austausch und Reparatur der Rotationselemente haben deshalb lange Anlagenstandzeiten zur Folge.

Aufgabe der Erfindung ist es, eine Vorrichtung, insbesondere eine Fördervorrichtung zu schaffen, die einen schnellen und einfachen Austausch bei Verschmutzung oder Verschleiß ermöglichen.

Diese Aufgabe wird durch eine Vorrichtung mit den Merkmalen des Anspruchs 1 gelöst. Die Aufgabe wird ferner auch im Rahmen einer industriellen Trocknungs-, Reinigungs- und/oder Lackieranlage nach Anspruch 15 gelöst.

Bei einer solchen erfindungsgemäßen Vorrichtung kann der erste Lagerabschnitt der Welle in dem ersten Wellenlager derart verlagert werden, dass der in dem zweiten Wellenlager aufgenommene zweite Lagerabschnitt freigegeben wird. Um den in dem zweiten Wellenlager aufgenommenen zweiten Lagerabschnitt freizulegen, kann insbesondere vorgesehen sein, dass der erste Lagerabschnitt der Welle in Richtung der Achse der Welle verlagerbar ist. Diese Achse kann insbesondere eine Drehachse für die Welle sein. Indem die Welle bei einem freigegebenen zweiten Lagerabschnitt in dem ersten Wellenlager um eine Achse schwenkbar ist, wird ein besonders einfacher Ein- und Ausbau der Welle mit Rotationselementen in der Vorrichtung ermöglicht. Bevorzugt ist diese Schwenkachse senkrecht zur Achse der Welle, insbesondere senkrecht zu einer Drehachse der Welle orientiert. Ein Aspekt der Erfindung ist auch, dass die Welle mit ihrem ersten Lagerabschnitt aus dem ersten Wellenlager herausgezogen werden kann. Erfindungsgemäß kann die Welle rotationsbeweglich oder auch feststehend ausgestaltet sein.

Der Erfindung liegt der Gedanke zugrunde, für eine Welle mit Rotationselementen in einer Fördereinrichtung einen Spannverschluss vorzusehen, mittels dessen die Welle in ihrem ersten Wellenlager und in ihrem zweiten Wellenlager von selbst gehalten wird. Hierfür umfasst die Vorrichtung ein Federmittel, das die Welle mit einer vorzugsweise in Richtung der Drehachse der Welle wirkende Kraft beaufschlagt. Das Federmittel dient dazu, den Lagerabschnitt der Welle in dem zweiten Wellenlager sicher zu halten. Der Spannverschluss kann geöffnet werden, indem auf die Welle eine Kraft ausgeübt wird, die eine zu der Achse der Welle parallele Kraftkomponente hat, die zu dem ersten Wellenlager weist.

Ein Gedanke der Erfindung ist auch, das erste Wellenlager der Welle drehbar zu lagern. Von Vorteil ist es, für das Koppeln einer Drehbewegung der Welle und dem ersten Wellenlager ein Drehübertragungsmittel vorzusehen. Dann ist ein Antrieb der Welle und daran aufgenommener Rotationselemente mit einem auf das erste Wellenlager wirkenden Drehantrieb möglich. Weil die Welle an dem zweiten Wellenlager bewegt werden kann, wenn der Schnellspannverschluss geöffnet wird, müssen dann für einen Ausbau der Welle keine Getriebeteile des Drehantriebs demontiert werden. Auch das zweite Wellenlager ist bevorzugt drehbar ausgeführt. Die Rotationselemente auf einer Welle können drehfest angeordnet oder auch drehbar gelagert sein. Eine Erkenntnis der Erfindung ist insbesondere, dass mit einem Rotationselement in Form einer Rolle, die eine oder mehrere Längsnuten aufweist, in einer Fördervorrichtung hohe Reibungskräfte auf Transportgegenstände übertragen werden können. Um über einen langen Zeitraum hinweg gleich bleibende Reibungskräfte zu gewährleisten, ist es dann günstig, für das Reinigen dieser Rollen in der Fördervorrichtung einen Rollenabstreifer vorzusehen.

Ein Rotationselement *in einer erfindungsgemäßen Vorrichtung kann* ist mit einem die Welle in einem Abschnitt umgebenen Rotationskörper ausgeführt *werden,* der in einen Teil und in einen zweiten Teil zerlegbar ist und der an der Welle lediglich mit einem Umfangssegment anliegt. Dem liegt der Gedanke zugrunde, dass ein Rotationselement an einer Welle in einer Fördervorrichtung befestigt werden kann, indem lediglich Teile eines Rotationskörpers des Rotationselements an die Welle angelegt und dann anschließend verbunden werden. Damit lässt sich insbesondere vermeiden, dass das Rotationselement beim Einbau über ein stirnseitiges Ende der Welle auf die Welle aufgeschoben werden muss. Dies ermöglicht den Ein- und Ausbau von Rotationselementen in der Fördervorrichtung, ohne dass eine Demontage von Wellen erforderlich ist, welche die Rotationselemente halten. Eine besonders hohe mechanische Belastbarkeit von Rotationselementen wird gewährleistet, indem die Rotationselemente in Polyamid ausgeführt werden, das glasfaserverstärkt ist. In chemisch aggressiver Umgebung sind Rotationselemente von Vorteil, die aus Teflon bestehen. Mit Rotationselementen aus Metall lassen sich hohe Lebensdauern erzielen.

Ein Rotationselement *in einer erfindungsgemäßen Vorrichtung* kann z. B. als Rolle ausgebildet sein. Es ist aber auch möglich, ein Rotationselement als Zahnrad auszuführen. Indem der erste Teil und der zweite Teil des Rollenkörpers in einem Verbindungsabschnitt mittels eines Formschlusses verbunden sind, der eine Relativbewegung des ersten und des zweiten Teils senkrecht zu einer Achse der Welle sperrt und der eine Relativbewegung des ersten und des zweiten Teils in Richtung der Achse der Welle freigibt, können die Teile durch Verschieben entlang der Welle miteinander verbunden und freigegeben werden. Das ermöglicht eine schnelle Montage und Demontage von Rotationselementen auf Wellen, die in eine Fördervorrichtung eingebaut sind.

Günstig ist insbesondere eine Verbindung von erstem und zweitem Teil mittels Formschluss, bei dem ein Abschnitt des ersten Teils z. B. ein Verzahnungselement, in eine an dem zweiten Teil ausgebildete Aufnahme eingreift oder bei dem Abschnitte des ersten und des zweiten Teils in ein drittes Element eingreifen. Alternativ oder zusätzlich kann eine Verbindung der Teile auch mit Schrauben bewirkt werden. Die Rotationselemente können auch mit zwei oder mehr in Längsrichtung versetzten Formschlussabschnitten ausgebildet werden. Die Rotationselemente können insbesondere mittels eines Federmittels gegen einen Anschlag gedrückt werden, um auf diese Weise eine Drehbewegung der Welle auf die Rolle zu übertragen.

Im Folgenden wird die Erfindung anhand der in der Zeichnung in schematischer Weise dargestellten Ausführungsbeispiele näher erläutert.

Es zeigen:
- Fig. 1: eine erste Fördervorrichtung mit Rollen und einem Skid;
- Fig. 2: eine Welle der ersten Fördervorrichtung mit einem ersten Wellenlager und einem zweiten Wellenlager;
- Fig. 3: einen Teilschnitt der Welle mit dem ersten Wellenlager;
- Fig. 4: einen Teilschnitt der Welle mit dem zweiten Wellenlager;
- Fig. 5: die Welle der ersten Fördervorrichtung in einer Schwenkposition;
- Fig. 6: eine zweite Fördervorrichtung mit Rollen und einem Transportbehälter;
- Fig. 7: eine Welle der zweiten Fördervorrichtung mit Rollen;
- Fig. 8: einen Abschnitt der Welle mit einer Rolle;
- Fig. 9: eine Rolle der zweiten Fördervorrichtung, die in einen ersten Teil und einen zweiten Teil zerlegt ist;
- Fig. 10: und Fig. 11 einen Schnitt einer als Walze ausgebildeten Rolle der Welle; und
- Fig. 12a: und Fig. 12b sowie Fig. 13, 14 und 15 weitere Beispiele für Rollen mit einem zerlegbaren Rollenkörper.

Die Fördervorrichtung 1 ist ein sogenannter Rollenbahnförderer, auf dem ein Skid 3 mit Kufen 4 bewegt werden kann. Die Fördervorrichtung 1 ist für den Einsatz in der Spritzkabine einer Lackieranlage für Kraftfahrzeugkarossen ausgelegt. Sie eignet sich aber auch für das Bewegen von Karossen durch andere Bereiche einer Lackieranlage, in denen die Fördervorrichtung 1 durch Lacknebel, Reinigungssubstanzen oder Spangut verschmutzen kann und in denen das Reinigen der Fördervorrichtung 1 mittels Hochdruckreiniger vermieden werden soll oder nicht ohne weiteres möglich ist. Für die Aufnahme des Skids 3 hat die Fördervorrichtung 1 als Rollen 25, 27 ausgebildete Rotationselemente, die auf Wellen 5 montiert sind. An jeder Welle 5 sind zwei Rollen angeordnet: Eine Tragrolle 25 und eine Führungsrolle 27, die dazu dient, die Kufe 4 des Skids 3 zu führen.

Eine jede Welle 5 ist in einem ersten Wellenlager 7 und in einem zweiten Wellenlager 11 gehalten. Die Wellenlager 7 sind an einen ersten Träger 9 aufgenommen. Die Wellenlager 11 befinden sich an einem Träger 13. Die Wellen 5 sind über ein Zahnriemengetriebe 21 gekoppelt, dem ein Antrieb in Form eines Elektromotors zugeordnet ist. Anstelle des Zahnriemengetriebes kann auch ein Kettengetriebe vorgesehen werden. Die Träger 9, 13 ruhen auf Stützen 15, 17. Diese Stützen sind auf einem Boden 19 mit Fundament festgelegt.

Durch Antreiben der Wellen 5 kann ein Skid 3 mit Kufen 4 aufgrund einer über die Rollen 25, 27 übertragenen Friktionskraft entsprechend dem Doppelpfeil 29 bewegt werden.

Als Schutz gegen Verschmutzung umfasst die Fördervorrichtung 1 abnehmbare Abdeckbleche 10, 12, 14 für das Zahnriemengetriebe 21, für die Wellenlager 7, 11 der Welle 5, für die Rollen 25, 27 und für die Kufen 4 des Skids 3.

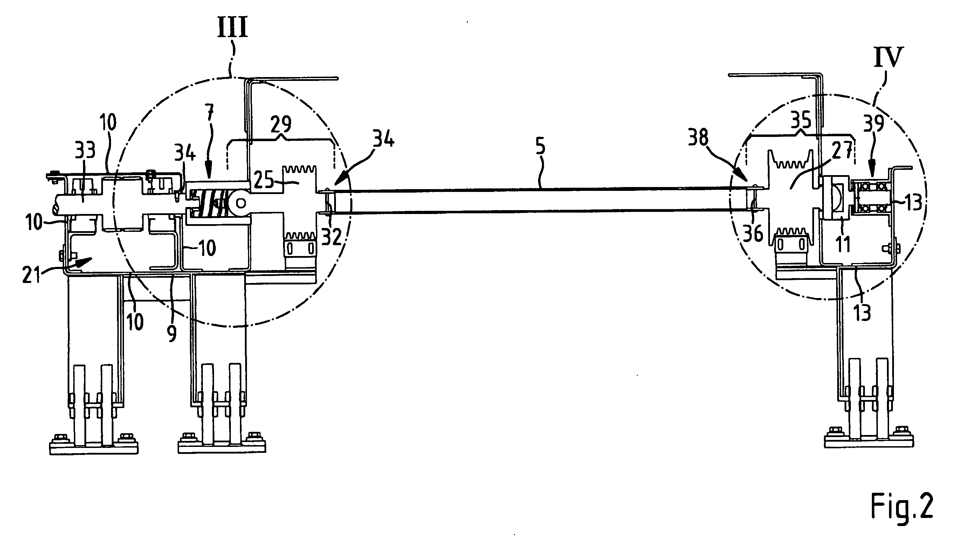

Die Fig. 2 zeigt einen Schnitt der Fördervorrichtung 1 mit einer Welle 5. Die Welle 5 ist mit einem Lagerabschnitt 29, an dem sich die Tragrolle 25 befindet, in dem ersten Wellenlager 7 aufgenommen. Der Lagerabschnitt 29 ist mittels eines lösbaren Federspannverschlusses 32 in einem Anschlussstück 34 an der Welle 5 festgelegt. Das Wellenlager 7 wiederum ist drehfest an die Getriebewelle 33 des Zahnriemengetriebes 21 angeschlossen. Mit einem Lagerabschnitt 35 ist die Welle 5 in dem zweiten Wellenlager 11 gelagert. In diesem zweiten Lagerabschnitt 35 ist die Führungsrolle 27 ausgebildet. Entsprechend dem Lagerabschnitt 29 ist auch der Lagerabschnitt 35 mittels eines lösbaren Federspannverschlusses 36 in einem Anschlussstück 38 an der Welle 5 drehfest festgelegt. Das zweite Wellenlager 11 ist in einem Drehlager 39 an dem Träger 13 gehalten.

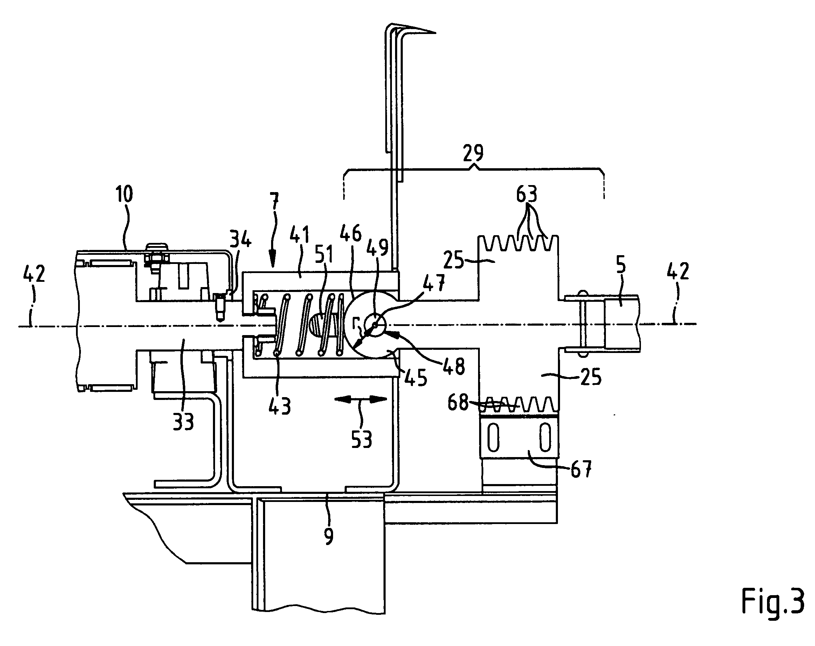

Die Fig. 3 zeigt den mit dem Kreis III kenntlich gemachten Bereich des Schnitts in der Fördervorrichtung 1 aus Fig. 2 in vergrößerter Darstellung. Die Abdeckbleche 10 bilden ein Gehäuse für das Zahnriemengetriebe 21. Auf der zu dem Wellenlager 7 weisenden Seite hat die Getriebewelle 33 eine Schleuderscheibe 34. Mittels solcher Schleuderscheiben 34 ist das von den Abdeckblechen gebildete Gehäuse an Durchführungen für die Getriebewellen 33 des Zahnriemengetriebes 21 abgedichtet. In dem Gehäuse ist damit das Zahnriemengetriebe 21 gekapselt. Das Zahnriemengetriebe 21 der Fördervorrichtung 1 ist so vor Verschmutzung gesichert.

Das Wellenlager 7 umfasst eine Gelenkbuchse 41. In dieser Gelenkbuchse 41 ist ein als Schraubenfeder 43 ausgebildetes Federmittel angeordnet. Die Schraubenfeder 43 ist mit einem zu der Getriebewelle 33 weisenden Ende in einem rückwärtigen Abschnitt der Gelenkbuchse 41 aufgenommen und dort abgestützt. Ein zu der Getriebewelle 33 weisendes Ende der Schraubenfeder 43 wirkt auf den Lagerabschnitt 29 der Welle 5. Der Lagerabschnitt 29 der Welle 5 umfasst einen Gelenkkörper 45. Der Gelenkkörper 45 hat eine Gelenkfläche 46 und weist eine Gelenkachse 47 auf. Die Gelenkachse 47 verläuft senkrecht zu der Achse 42 der Welle 5. Die Gelenkfläche 46 hat einen konstanten Krümmungsradius r. In der Gelenkachse 47 des Gelenkkörpers 45 befindet sich eine Durchgangsbohrung 48. In dieser Bohrung 48 ist Gelenkbolzen 49 angeordnet. Der Gelenkbolzen 49 hat zwei Enden, die aus dem Gelenkkörper herausragen. Diese Enden greifen in zwei schlitzförmige Nuten 51, die an der Gelenkbuchse 41 ausgebildet sind. Der Gelenkbolzen 49 ist in diesen schlitzförmigen Nuten 51 an der Gelenkbuchse 41 geführt. Der Gelenkbolzen 49 hat eine Doppelfunktion. Der Gelenkbolzen 49 bewirkt eine Drehkopplung der Welle 5 mit der Gelenkbuchse 41 um die Achse 42 der Welle 5. Der Gelenkbolzen 49 fungiert darüber hinaus als Gelenkwelle, die entsprechend dem Doppelpfeil 53 verlagerbar ist. Mittels des Gelenkbolzens 49 ist die Welle 5 mit ihrem Lagerabschnitt 29 in dem Wellenlager 7 schwenkbeweglich geführt.

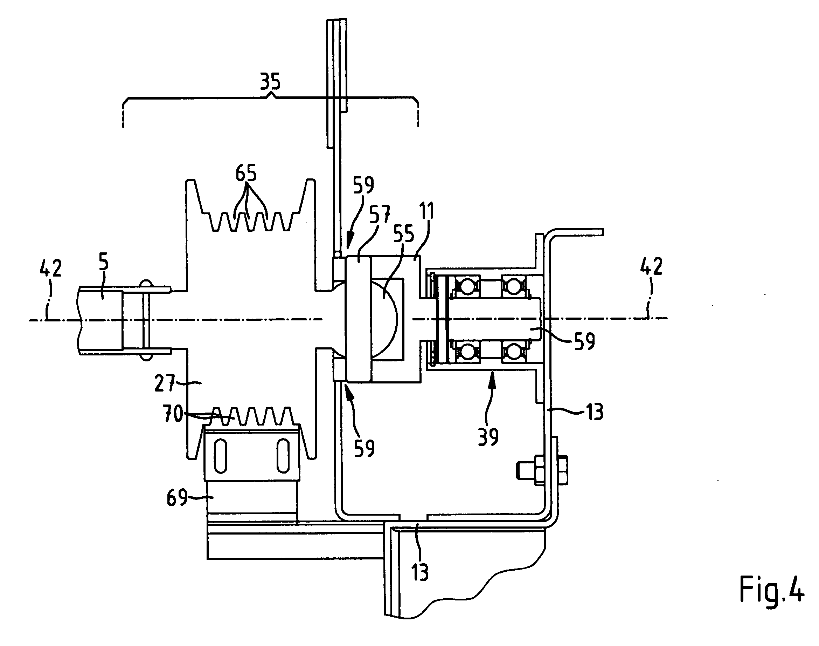

Die Fig. 4 zeigt den mit dem Kreis IV kenntlich gemachten Bereich des Schnitts der Fördervorrichtung 1 aus Fig. 2 in vergrößerter Darstellung. In dem zweiten Lagerabschnitt 35 ist ein Gelenkkörper 55 ausgebildet, der dem Gelenkkörper 45 in dem Lagerabschnitt 29 entspricht. Auch der zweite Lagerabschnitt 39 ist mittels eines Bolzens 57 in zwei schlitzförmigen Nuten 59 an den zweiten Wellenlager 11 geführt. Das zweite Wellenlager 11 ist mit einer Welle 59 in dem Drehlager 39 aufgenommen. Das Drehlager 39 ist an dem Träger 13 festgelegt. Die auf den Lagerabschnitt 29 der Welle 5 wirkende Schraubenfeder 43 hält den zweiten Lagerabschnitt 35 der Welle 5 in dem zweiten Wellenlager 11.

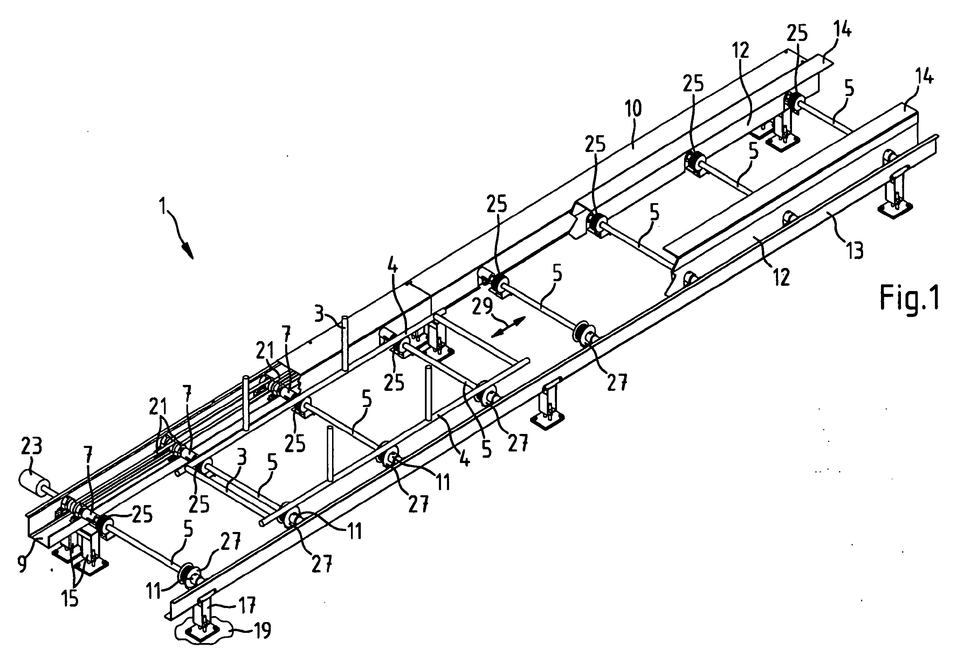

Um eine hohe und zuverlässige Kraftübertragung auf die Kufen des in Fig. 1 gezeigten Skids 3 zu gewährleisten, sind in den Umfangsflächen der Rollen 25, 27 in Umfangsrichtung verlaufende rillenförmige Vertiefungen 63, 65 ausgebildet. Diese Vertiefungen 63, 65 verlaufen dort, wo der Skid 3 aufliegt, parallel zu den Kufen 4 des Skids 3. Die Vertiefungen 63, 65 bewirken eine lokal erhöhte Pressung zwischen den Kufen 4 des Skids 3 und den Rollen 25,27.

Bei Betrieb der Fördervorrichtung werden die Tragrollen 25, 27 über Nutenabstreifer 67, 69 gereinigt, die an dem ersten Träger 9 bzw. dem zweiten Träger 13 schenkbeweglich befestigt sind. Die Nutenabstreifer 67, 69 haben Zähne 68, 70, welche in die Vertiefungen 63, 65 der Rollen 25, 27 eingreifen.

Die Anordnung und Gestaltung der Wellenlager 7, 11, und der Lagerabschnitte 29, 35 der Wellen 5 in der Fördervorrichtung 1 ermöglicht einen schnellen Aus- und Einbau von Wellen und Rollen im Rahmen von Montage- und Wartungsarbeiten: Hierfür werden zunächst die Nutenabstreifer 67, 69 aus ihrer Eingriffsposition mit den nutenförmigen Vertiefungen 63, 65 der Rollen 25, 27 geschwenkt. Dann werden die Abdeckbleche 14 für die Kufen 4 des Skids 3 dort entfernt, wo der Aus- oder Einbau einer Welle 5 erfolgen soll.

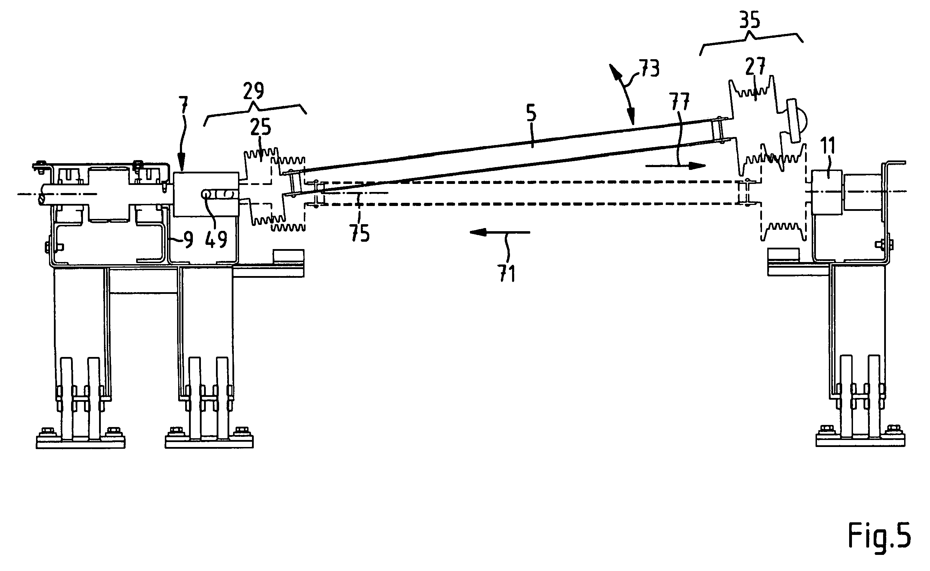

Die Fig. 5 ist ein Schnitt eines Bereichs der Fördervorrichtung 1, in dem die Abdeckbleche 12, 14 abgenommen sind. Eine Welle 5 mit den Rollen 25, 27 ist hier für eine Wartungskraft sehr gut zugänglich.

Um die Welle 5 aus dem Wellenlager 7 und dem Wellenlager 11 zu entnehmen, muss eine Wartungskraft lediglich die Welle 5 in Richtung des Pfeils 71, d. h. in Richtung der Drehachse der Welle 5 gegen die Kraft der Schraubenfeder 43 in das Wellenlager 7 hineinbewegen. Sobald das zweite Wellenlager 11 den zweiten Wellenteil 35 freigibt, kann die Welle 5 entsprechend dem Doppelpfeil 73 um die zu der Achse 42 der Welle 5 senkrechte Achse 47 des Bolzens 49 in dem ersten Wellenlager 7 geschwenkt werden. Darauf lässt sich die Welle 5 aus dem ersten Wellenlager 7 herausziehen, indem sie mit ihrem Lagerabschnitt 29 entlang der Achse 75 des Wellenlagers 7 in Richtung des Pfeils 77 bewegt wird.

Die Welle 5 kann dann zur Überholung und Reinigung mit den Rollen 25, 27 in eine Werkstatt gebracht werden.

Der Einbau einer Welle 5 kann in entsprechender Weise zu dem Ausbau erfolgen: Zunächst wird der Lagerabschnitt 29 der Welle 5 in eine Gelenkbuchse 41 an der Fördervorrichtung 1 eingeführt. Dabei wird der Gelenkbolzen 49 mit den Nuten 51 in der Gelenkbuchse 41 in Eingriff gebracht. Die Wartungskraft muss dann den Lagerabschnitt 29 gegen die Kraft der Schraubenfeder 43 in die Gelenkbuchse 41 bewegen. Dann wird die Welle 5 in die Drehachse 42 der Welle 5 geschwenkt. Mit Unterstützung der Kraft der Schraubenfeder 43 kann dann die Welle 5 mit dem Lagerabschnitt 35 in das Wellenlager 11 eingeführt werden.

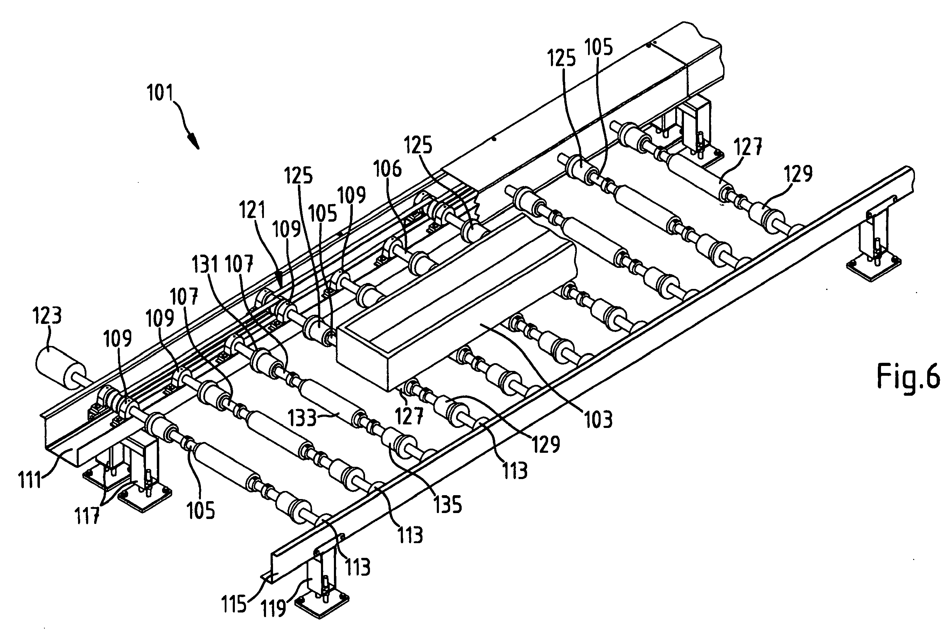

Die Fig. 6 zeigt eine Fördervorrichtung 101 in Form einer Rollenbahn, die für das Bewegen von Warenkörben 103 oder Transportkisten durch eine Produktionsanlage ausgelegt ist. Die Fördervorrichtung 101 enthält eine Vielzahl von Wellen 105, 107. Eine jede Welle 105, 107 ist in einem Wellenlager 109 aufgenommen, das sich an dem Träger 111 befindet, und in einem Wellenlager 113 gehalten, das an dem Träger 115 angeordnet ist. Die Träger 111, 115 sind wie die Träger der Fördervorrichtung 1 aus Fig. 1 auf Stützen 117 und 119 montiert. Die Wellen 105 sind über ein Zahnriemengetriebe 121 gekoppelt. Sie können mittels eines Elektromotors 123 angetrieben werden. Den Wellen 107 dagegen ist kein Antrieb zugeordnet.

An den Wellen 105 sind Rollen 125, 127 und 129 aufgenommen. Die Rollen 125, 127 und 129 sind mit den Wellen 105 drehfest verbunden. Die Wellen 107 dagegen tragen Rollen 131, 133 und 135, die drehbar gelagert sind. Die Rollen 125, 127 und 129 sowie 131, 133 und 135 in der Fördervorrichtung bestehen aus Polyamid.

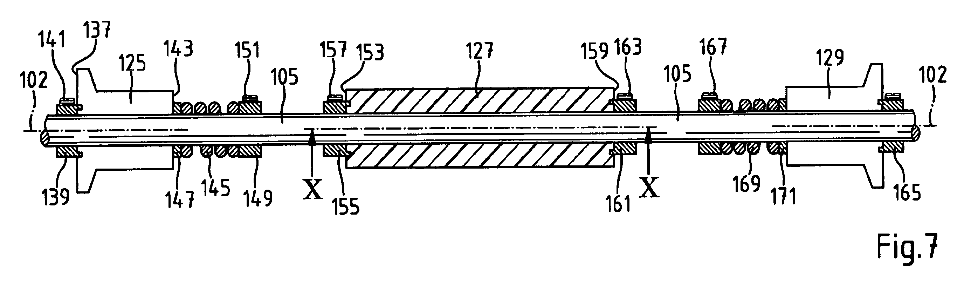

Die Fig. 7 ist ein Teilschnitt einer Welle 105 in der Fördervorrichtung 101. Die Welle 105 hat eine Drehachse 102. Die Rolle 125 hat eine Stirnseite 137, in die ein zu der Stirnseite 137 weisender Anschlussabschnitt eines Ringelements 139 eingreift. Das Ringelement 139 ist mittels einer Befestigungsschraube 141 drehfest auf der Welle 105 gesichert. Die Rolle 125 wird mittels eines an der Stirnseite 143 der Rolle 125 angreifenden Federelements 145 gegen das Ringelement 139 gedrückt. Hierzu wirkt das Federelement 145 auf eine Ringscheibe 147, die an der Stirnseite 143 der Rolle 125 anliegt. Das Federelement 145 ist mit einem Ringelement 149 abgestützt, das auf der Welle 105 mittels einer Befestigungsschraube 151 gesichert ist.

Die Rolle 127 ist eine Walze. Sie erstreckt sich in Längsrichtung der Welle 105. An der Stirnseite 153 der Rolle 127 greift ein Anschlussabschnitt eines Ringelements 155 ein. Das Ringelement 155 ist mittels einer Befestigungsschraube 157 drehfest auf der Welle 105 gesichert. Die Rolle 127 ist zusätzlich mit einem an der Stirnseite 159 anliegenden Ringelement 161 gegen seitliches Verschieben gesichert. Das Ringelement 161 ist mittels einer Befestigungsschraube 163 auf der Welle 105 festgelegt.

Die Rolle 129 ist entsprechend der Rolle 125 an der Welle 105 aufgenommen. Sie ist mittels zweier Ringelemente 165, 167, eines Federelements 169 und einer Ringscheibe 171 mit der Welle 105 drehfest gekoppelt.

Die Rollen 125, 127 und 129 sind so gestaltet, dass sie auf die Welle 105 montiert werden können, ohne dass ein Ausbau der Welle 105 aus den Wellenlagern 111, 113 erforderlich ist. Entsprechendes gilt für die Rollen 131, 133 und 135 and den Wellen 106 der Fördervorrichtung 101.

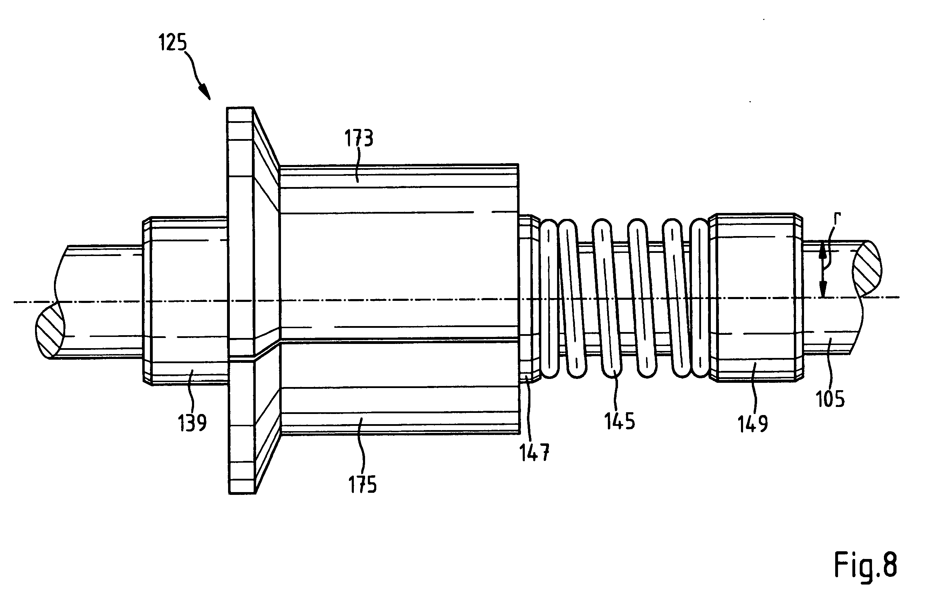

Die Fig. 8 zeigt einen Abschnitt der Welle 105 mit der Rolle 125. Die Rolle 125 hat einen Rollenkörper, der einen ersten Teil 173 und einen zweiten Teil 175 umfasst. Der erste Teil 173 und der zweite Teil 175 der Rolle 125 sind lösbar verbunden. Der erste Teil 173 hat einen Formschlussabschnitt, der in Kämmeingriff mit einem Formschlussabschnitt steht, der in dem zweiten Teil 175 ausgebildet ist. Der erste und der zweite Teil 173, 175 der Rolle 125 sind an die Welle 105 angelegt. Mittels dieses Formschlusses ist die Bewegung der Teile 173, 175 um die Achse 177 der Welle 105 gekoppelt. Eine mögliche seitliche Verlagerung Teile 173, 175 der Rolle 125 wird durch die Ringelemente 139, 149, das Federelement 145 und die Ringscheibe 147 auf der Welle 105 unterbunden.

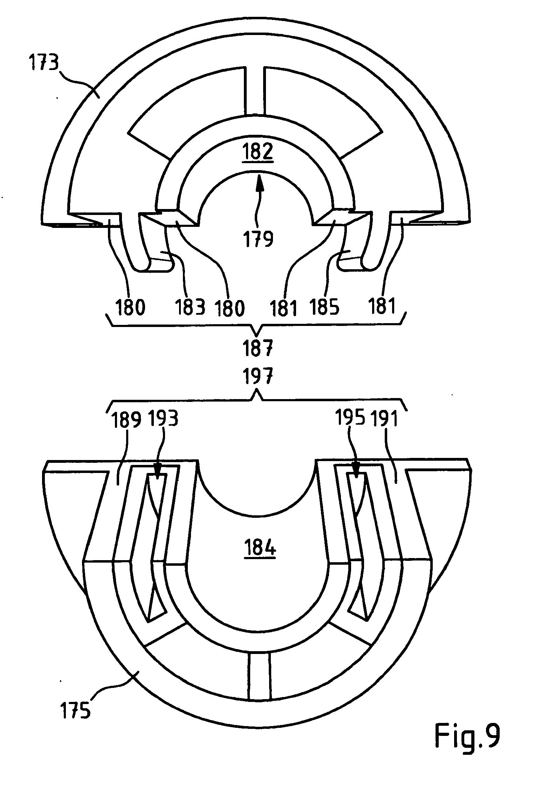

Die Fig. 9 zeigt die Rolle 125 in zerlegtem Zustand. Der erste Teil 173 der Rolle 125 hat die Geometrie eines Halbzylinders. Die Kontur der Innenwandung 179 des Halbzylinders ist entsprechend dem Radius r der Welle 105 ausgebildet. Der Teil 173 hat eine erste ebene Mantelfläche 180 und eine zweite ebene Mantelfläche 181. Bei Anschluss der Rolle 125 an die Welle 105 erstrecken sich diese Mantelflächen 181 entlang der Welle. Dabei liegen die Mantelfläche 179, 181 in der Querschnittsebene der Welle 105, in welcher die Drehachse der Welle 105 verläuft. Dieser Teil 173 der Rolle 125 und der Teil 175 der Rolle 125 liegen dabei nur mit dem Umfangssegment 182 bzw. dem Umfangssegment 184 an de Rolle 105 an.

An der Mantelfläche 180 ist ein Verzahnungselement 183 ausgebildet. Das Verzahnungselement 183 ist bogenförmig gekrümmt und ragt schräg aus der ersten Mantelfläche 179 hervor. Die Mantelfläche 181 hat ein dem Verzahnungselement 183 entsprechendes Verzahnungselement 185. Bei Anlegen an die Welle 105 weisen die Verzahnungselemente 183, 185 zu deren Außenumfangsfläche hin. Die Mantelfläche 180 und 181 mit den Verzahnungselementen 183, 185 wirken als Formschlussabschnitt 187 des Teils 173 der Rolle 125.

Der zweite Teil 175 der Rolle 125 ist ebenfalls als Halbzylinder geformt. Der Teil 175 hat eine erste ebene Mantelfläche 189 und eine zweite ebene Mantelfläche 191. Die Mantelflächen 189, 191 haben jeweils eine schlitzförmige Aufnahme 193, 195 für das Verzahnungselement 183 bzw. das Verzahnungselement 185. Die Mantelflächen 189, 191 mit den schlitzförmigen Aufnahmen 193, 195 bilden einen Formschlussabschnitt 197 für den zweiten Teil 175 der Rolle 125. Durch Eingriff der Verzahnungselemente 183, 185 in die schlitzförmigen Aufnahmen 193, 195 werden der erste Teil der Rolle 125 mit dem zweiten Teil 175 formschlüssig verbunden. Dieser Eingriff kann dadurch bewirkt werden, dass in einem ersten Schritt der Teil 173 und dass der Teil 175 an die Welle 105 gelegt wird. In einem darauf folgenden zweiten Schritt können dann das Teil 173 und das Teil 175 entlang der Achse der Welle 105 übereinander geschoben werden. Dabei geraten der Teil 173 und der Teil 175 an ihren Formschlussabschnitten in gegenseitigen Eingriff.

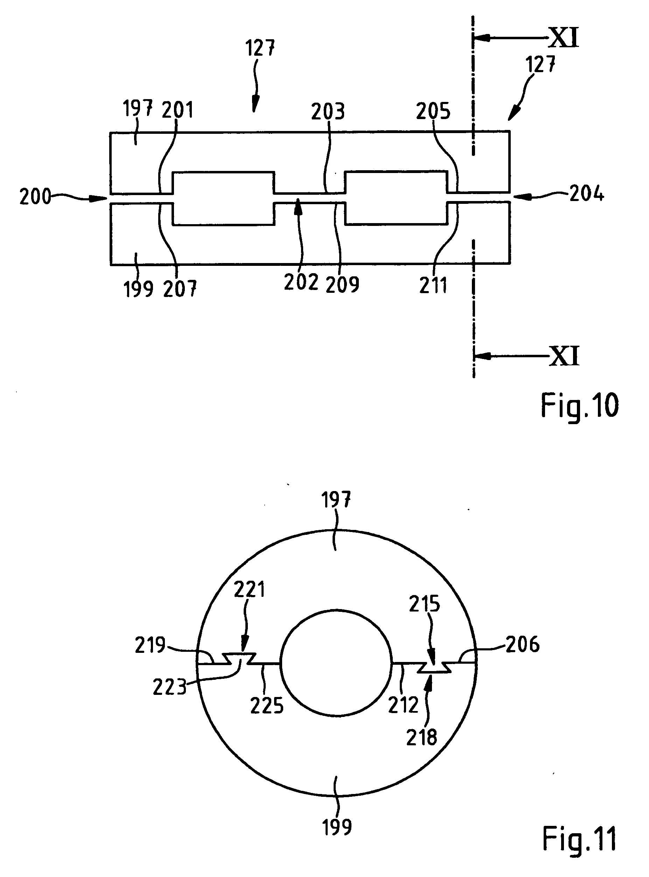

Die Fig. 10 zeigt einen Schnitt der Rolle 127 aus Fig. 7. Die Rolle 127 hat einen ersten Rollenteil 197 und einen zweiten Rollenteil 199. Die Rollenteile 197, 199 haben jeweils die Form einer Zylinderhälfte. Der erste und der zweite Rollenteil 197, 199 sind an drei in Längsrichtung der Welle 105 versetzten Abschnitten 200, 202 und 204 formschlüssigen verbunden.

Für das formschlüssige Verbinden des ersten Rollenteils 197 und des zweiten Rollenteils 199 haben die Rollenteile 197, 199 jeweils drei Formschlussabschnitte 201, 203, 205 sowie 207, 209 und 211.

Die Fig. 11 ist ein Schnitt der Rolle 127 entlang der Linie XI - XI in Fig. 10. Die Formschlussabschnitt 205 des Rollenteils 197 hat eine Anschlussfläche 206 mit einem Schwalbenschwanzkupplungselement 215. Für das Schwalbenschwanzkupplungselement 215 gibt es in dem Formschlussabschnitt des Rollenteils 199 eine Anschlussfläche 212 mit einer Aufnahme 218. Der Formschlussabschnitt 205 umfasst außerdem eine Anschlussfläche 219 mit einer Aufnahme 221 für ein Schwalbenschwanzkupplungselement 223, das an einer Anschlussfläche 225 des Rollenteils 199 angeordnet ist.

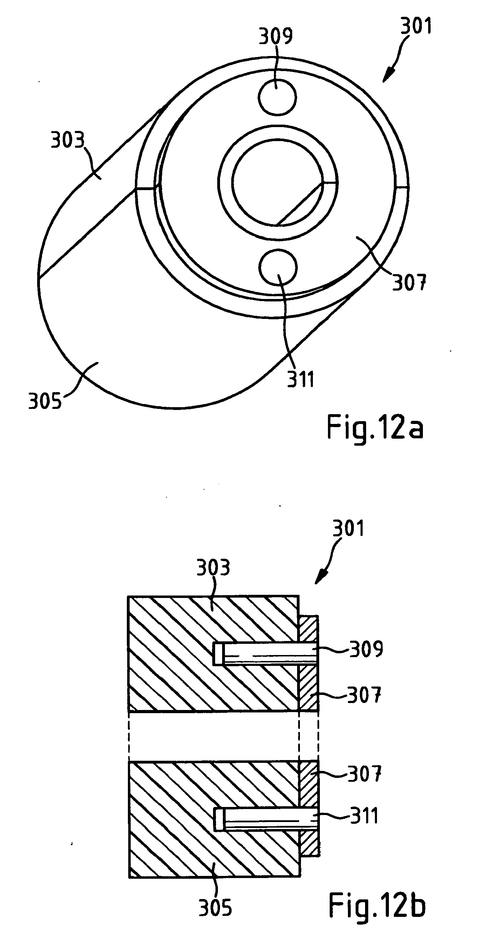

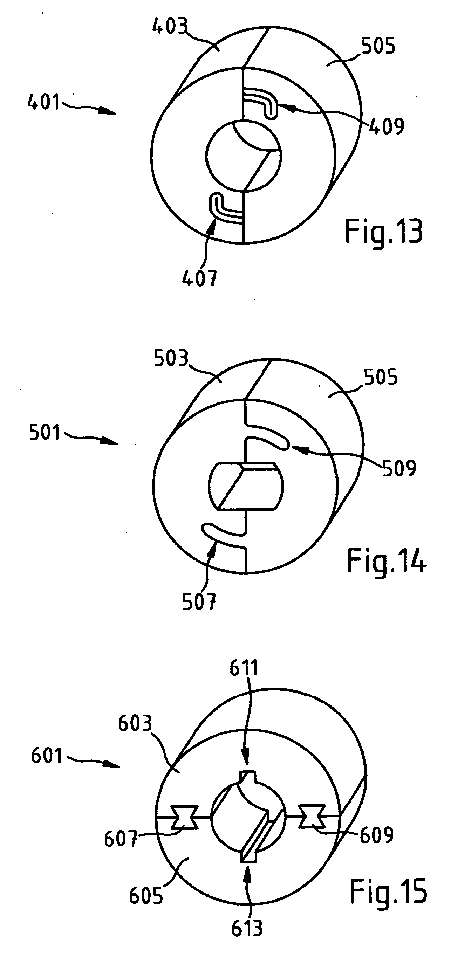

In den Fig. 12a und 12b und in den Fig. 13, 14 und 15 sind weitere Beispiele für Rotationselemente in Form von Rollen mit einem zerlegbaren Rotationskörper gezeigt, der aus mehreren Teilen aufgebaut ist. Diese Rotationselemente können auf einer Welle montiert werden, ohne dass die Rotationselemente hierfür über ein Stirnende der Welle geschoben werden muss.

Die Rolle 301 in Fig. 12a hat ein Rollenteil 303 und ein Rollenteil 305. Die Fig. 12b zeigt die Rolle 301 in einem Schnitt. Der Rollenteil 303 ist mit dem Rollenteil 305 über eine auf der Welle angeordnete Scheibe 307 verbunden, die mit durch Schrauben 309, 311 in den Rollenteilen 303 und 305 festgelegt ist.

Die Rolle 401 in Fig. 13 hat Rollenteile 403, 405, die Anschlussabschnitte haben, in denen Formschlusselemente 407, 409 mit Hakengeometrie ausgebildet sind.

In der Fig. 14 ist eine Rolle 501 gezeigt, die Rollenteile 503, 505 mit Anschlusselementen 507, 509 aufweist, die kreisbogenförmig gekrümmt sind. Die Rolle 501 ist für den Anschluss auf eine eckige Profilwelle ausgelegt.

Die Fig. 15 zeigt eine Rolle 601 mit Rollenteilen 603, 605, die mittels zweier Schienen 607, 609 verbunden sind. Die Schienen 607, 609 haben einen schwalbenschwanzförmigen Querschnitt. In ihrem zur Welle weisenden Abschnitt haben die Rollenteile 603 und 605 eine Ausnehmung 611, 613. Die Ausnehmungen 611, 613 dienen für den Eingriff eines Verzahnungselements, das an der Welle angeordnet ist. Hierdurch wird eine Drehmomentübertragung von der Welle auf die Rolle 601 ermöglicht.

Es sei bemerkt, dass die beschriebenen Rollen von einer Welle insbesondere dadurch entfernt werden können, indem die Rolle mittels eines Meißels oder eines Sägewerkzeugs zerstört wird. Die durch Zerstörung entfernten Rollen können dann durch die beschriebenen Rollen mit einem mehrteilig gestalteten Rollenkörper ersetzt werden, ohne dass hierfür ein Ausbau der Welle in einer Fördervorrichtung notwendig ist.

## Patentansprüche

1. Vorrichtung, insbesondere Fördervorrichtung (1), mit wenigstens einem Rotationselement (25, 27) und mit einer das Rotationselement (25, 27) tragenden, drehbeweglichen Welle (5), die mit einem ersten Lagerabschnitt (29) in einem ersten Wellenlager (7) aufgenommen ist und die mit einem zweiten Lagerabschnitt (35) in einem zweiten Wellenlager (11) gehalten ist, wobei
der erste Lagerabschnitt (29) der Welle (5) in dem ersten Wellenlager (7) derart verlagerbar ist, dass der zweite Lagerabschnitt (35) von dem zweiten Wellenlager (11) freigegeben wird,
**dadurch gekennzeichnet, dass**
der erste Lagerabschnitt (29) der Welle (5) einen Gelenkkörper (45) umfasst und das erste Wellenlager (7) eine den Gelenkkörper (45) aufnehmende Gelenkbuchse (41) aufweist, die mit der Welle (5) drehgekoppelt ist, wobei die Welle (5) mit dem Gelenkkörper (45) in der Gelenkbuchse (41) schwenkbeweglich geführt ist, so dass die Welle (5) mit dem Gelenkkörper (45) bei einem freigegebenen zweiten Lagerabschnitt (35) in dem ersten Wellenlager (7) um eine zu der Achse (42) der Welle (5) senkrechte Achse (47) geschwenkt und dann mit dem ersten Lagerabschnitt (29) aus dem ersten Wellenlager (7) herausgezogen werden kann.

2. Vorrichtung nach Anspruch 1, **dadurch gekennzeichnet, dass** der Gelenkkörper (45) einen die Welle (5) in der Gelenkbuchse schwenkbeweglich führenden Gelenkbolzen (49) umfasst.

3. Vorrichtung nach Anspruch 2, **dadurch gekennzeichnet, dass** der Gelenkbolzen (49) eine Drehkopplung der Welle (5) mit der Gelenkbuchse (41) bewirkt.

4. Vorrichtung nach Anspruch 3, **dadurch gekennzeichnet, dass** die Gelenkbuchse (41) zwei schlitzförmige Nuten (51) für den Eingriff des Gelenkbolzens (49) aufweist, wobei der Gelenkbolzen (49) zwei Enden hat, die aus dem Gelenkkörper (45) herausragen, und die in die Nuten (50) greifen.

5. Vorrichtung nach einem der Ansprüche 1 bis 4, **dadurch gekennzeichnet, dass** der Gelenkkörper (45) eine einen konstanten Krümmungsradius (r) aufweisende Gelenkfläche (46) hat.

6. Vorrichtung nach einem der Ansprüche 1 bis 5, **dadurch gekennzeichnet, dass** ein Federmittel (43) vorgesehen ist, das die Welle (5) mit einer Kraft beaufschlagt, um den zweiten Lagerabschnitt (35) in dem zweiten Wellenlager (11) zu halten.

7. Vorrichtung nach einem der Ansprüche 1 bis 6, **dadurch gekennzeichnet, dass** das erste Wellenlager (7) drehbar gelagert ist.

8. Vorrichtung nach Anspruch 7, **dadurch gekennzeichnet, dass** das erste Wellenlager (7) mit einem Drehantrieb (21, 23) gekoppelt ist.

9. Vorrichtung nach einem der Ansprüche 1 bis 8, **dadurch gekennzeichnet, dass** das zweite Wellenlager (11) drehbar gelagert ist.

10. Vorrichtung nach einem der Ansprüche 1 bis 9, **dadurch gekennzeichnet, dass** das Rotationselement (125, 127, 129, 131, 133, 135, 301, 401, 501, 601) einen die Welle (105, 106) umgebenden Rotationskörper aufweist, der in wenigstens einen ersten Teil (173) und in einen zweiten Teil (175) zerlegbar ist, und der an der Welle (105, 106) mit lediglich einem Umfangssegment (182, 184) anliegt.

11. Vorrichtung nach Anspruch 10, **dadurch gekennzeichnet, dass** der erste Teil (173) und der zweite Teil (175) in einem Abschnitt (187, 197) mittels eines Formschlusses verbunden sind, der eine Bewegung des ersten Teils (173) und des zweiten Teils (175) senkrecht zu einer Achse (102) der Welle (105) sperrt und der eine Bewegung des ersten Teils (173) und des zweiten Teils (175) in Richtung der Achse (102) der Welle (105) freigibt.

12. Vorrichtung nach Anspruch 11, **dadurch gekennzeichnet, dass** der Formschluss durch ein an dem ersten Teil (173) angeordnetes Verzahnungselement (183, 185) gebildet ist, das in eine an dem zweiten Teil (175) ausgebildete Aufnahme (193, 195) eingreift, oder der Formschluss durch ein Befestigungselement (301, 311) bewirkt ist.

13. Vorrichtung nach Anspruch 12 oder 13, **dadurch gekennzeichnet, dass** zwei oder mehr in Längsrichtung versetzte Formschlussabschnitte (200, 202, 204) für das formschlüssige Verbinden eines ersten Teils (197) und eines zweiten Teils (199) des Rotationskörpers vorgesehen sind.

14. Vorrichtung nach Anspruch 1 bis 13, **dadurch gekennzeichnet, dass** das Rotationselement (125) über ein Federmittel (145) gegen einen Anschlag (139) gedrückt ist und der Anschlag (139) eine Drehbewegung der Welle (105) auf das Rotationselement (125) überträgt.

15. Industrielle Trocknungs-, Reinigungs- und/oder Lackieranlage mit einer Vorrichtung gemäß einem der Ansprüche 1 bis 14 als Fördervorrichtung (1) für das Bewegen von Fahrzeugkarossen.

## Claims

1. Apparatus, in particular conveying apparatus (1), having at least one rotation element (25, 27) and having a rotationally movable shaft (5) which carries the rotation element (25, 27), is received by way of a first bearing section (29) in a first shaft bearing (7) and which is held by way of a second bearing section (35) in a second shaft bearing (11),
it being possible for the first bearing section (29) of the shaft (5) to be displaced in the first shaft bearing (7) in such a way that the second bearing section (35) is released from the second shaft bearing (11),
**characterized in that**
the first bearing section (29) of the shaft (5) comprises a joint body (45) and the first shaft bearing (7) has a pivot bush (41) which receives the joint body (45) and is coupled rotationally to the shaft (5), the shaft (5) being guided with the joint body (45) in the pivot bush (41) in a pivotably movable manner, with the result that the shaft (5) can be pivoted with the joint body (45) in the case of a released second bearing section (35) in the first shaft bearing (7) about an axis (47) which is perpendicular with respect to the axis (42) of the shaft (5), and can then be pulled out of the first shaft bearing (7) with the first bearing section (29).

2. Apparatus according to Claim 1, **characterized in that** the joint body (45) comprises a joint pin (49) which guides the shaft (5) in the pivot bush in a pivotably movable manner.

3. Apparatus according to Claim 2, **characterized in that** the joint pin (49) brings about a rotational coupling of the shaft (5) to the pivot bush (41).

4. Apparatus according to Claim 3, **characterized in that** the pivot bush (41) has two slot-shaped grooves (51) for the engagement of the joint pin (49), the joint pin (49) having two ends which protrude out of the joint body (45) and which reach into the grooves (51).

5. Apparatus according to one of Claims 1 to 4, **characterized in that** the joint body (45) has a joint face (46) which has a constant curvature radius (r).

6. Apparatus according to one of Claims 1 to 5, **characterized in that** a spring means (43) is provided which loads the shaft (5) with a force, in order to hold the second bearing section (35) in the second shaft bearing (11).

7. Apparatus according to one of Claims 1 to 6, **characterized in that** the first shaft bearing (7) is mounted rotatably.

8. Apparatus according to Claim 7, **characterized in that** the first shaft bearing (7) is coupled to a rotary drive (21, 23).

9. Apparatus according to one of Claims 1 to 8, **characterized in that** the second shaft bearing (11) is mounted rotatably.

10. Apparatus according to one of Claims 1 to 9, **characterized in that** the rotation element (125, 127, 129, 131, 133, 135, 301, 401, 501, 601) has a rotation body which surrounds the shaft (105, 106), can be dismantled into at least one first part (173) and into a second part (175), and which bears with merely one circumferential segment (182, 184) against the shaft (105, 106).

11. Apparatus according to Claim 10, **characterized in that** the first part (173) and the second part (175) are connected in one section (187, 197) by means of a positively locking connection which blocks a movement of the first part (173) and the second part (175) perpendicularly with respect to an axis (102) of the shaft (105) and which releases a movement of the first part (173) and the second part (175) in the direction of the axis (102) of the shaft (105).

12. Apparatus according to Claim 11, **characterized in that** the positively locking connection is formed by a spline element (183, 185) which is arranged on the first part (173) and engages into a receptacle (193, 195) which is formed on the second part (175), or the positively locking connection is brought about by a fastening element (301, 311).

13. Apparatus according to Claim 12 or 13, **characterized in that** two or more positively locking sections (200, 202, 204) which are offset in the longitudinal direction are provided for the positively locking connection of a first part (197) and a second part (199) of the rotation body.

14. Apparatus according to Claims 1 to 13, **characterized in that** the rotation element (125) is pressed against a stop (139) via a spring means (145), and the stop (139) transmits a rotational movement of the shaft (105) to the rotation element (125).

15. Industrial drying, cleaning and/or varnishing system having an apparatus according to one of Claims 1 to 14 as a conveying apparatus (1) for moving vehicle bodies.

## Revendications

1. Dispositif, en particulier dispositif de transport (1), présentant au moins un élément rotatif (25, 27) et un arbre (5) apte à se déplacer en rotation et portant l'élément rotatif (25, 27), l'arbre étant repris dans un premier palier d'arbre (7) par une première partie de palier (29) et maintenu dans un deuxième palier d'arbre (11) par une deuxième partie de palier (35),
la première partie de palier (29) de l'arbre (5) pouvant être déplacée dans le premier palier d'arbre (7) de telle sorte que la deuxième partie de palier (35) soit libérée du deuxième palier d'arbre (11), **caractérisé en ce que**
la première partie de palier (29) de l'arbre (5) comporte un corps d'articulation (45) et le premier palier d'arbre (7) présente une douille d'articulation (41) qui reprend le corps d'articulation (45) et qui est accouplée à rotation à l'arbre (5), l'arbre (5) étant guidé à pivotement avec le corps d'articulation (45) dans la douille d'articulation (41) de telle sorte que l'arbre (5) puisse pivoter avec le corps d'articulation (45) dans le premier palier d'arbre (7) autour d'un axe (47) perpendiculaire à l'axe (42) de l'arbre (5) lorsque la deuxième partie de palier (35) est libérée et puisse ainsi être extrait hors du premier palier d'arbre (7) avec la première partie de palier (29).

2. Dispositif selon la revendication 1, **caractérisé en ce que** le corps d'articulation (45) comporte un goujon d'articulation (49) qui guide à pivotement l'arbre (5) dans la douille d'articulation.

3. Dispositif selon la revendication 2, **caractérisé en ce que** le goujon d'articulation (49) a pour effet un accouplement rotatif de l'arbre (5) sur la douille d'articulation (41).

4. Dispositif selon la revendication 3, **caractérisé en ce que** la douille d'articulation (41) présente deux rainures (51) en forme de fente destinées à engager le goujon d'articulation (49), le goujon d'articulation (49) présentant deux extrémités qui débordent du corps d'articulation (45) et qui s'engagent dans les rainures (51).

5. Dispositif selon l'une des revendications 1 à 4, **caractérisé en ce que** le corps d'articulation (45) présente une surface d'articulation (46) dont le rayon de courbure (r) est constant.

6. Dispositif selon l'une des revendications 1 à 5, **caractérisé en ce qu'**il présente un moyen élastique (43) qui applique sur l'arbre (5) une force qui maintient la deuxième partie de palier (35) dans le deuxième palier d'arbre (11).

7. Dispositif selon l'une des revendications 1 à 6, **caractérisé en ce que** le premier palier d'arbre (7) est monté à rotation.

8. Dispositif selon la revendication 7, **caractérisé en ce que** le premier palier d'arbre (7) est accouplé à un entraînement en rotation (21, 23).

9. Dispositif selon l'une des revendications 1 à 8, **caractérisé en ce que** le deuxième palier d'arbre (11) est monté à rotation.

10. Dispositif selon l'une des revendications 1 à 9, **caractérisé en ce que** l'élément de rotation (125, 127, 129, 131, 133, 135, 301, 401, 501, 601) présente un corps de rotation qui entoure l'arbre (105, 106), qui peut être décomposé en au moins une première partie (173) et une deuxième partie (175) et qui repose sur l'arbre (105, 106) uniquement par un segment périphérique (182, 184).

11. Dispositif selon la revendication 10, **caractérisé en ce que** la première partie (173) et la deuxième partie (175) sont reliées en une section (187, 197) au moyen d'une liaison en correspondance géométrique qui bloque le déplacement de la première partie (173) et de la deuxième partie (175) perpendiculairement à un axe (102) de l'arbre (105) et qui libère le déplacement de la première partie (173) et de la deuxième partie (175) dans la direction de l'axe (102) de l'arbre (105).

12. Dispositif selon la revendication 11, **caractérisé en ce que** la correspondance géométrique est formée par un élément denté (183, 185) disposé sur la première partie (173) et qui s'engage dans un logement (193, 195) formé sur la deuxième partie (175), ou la liaison en correspondance géométrique est formée par un élément de fixation (301, 311).

13. Dispositif selon les revendications 12 ou 13, **caractérisé en ce que** deux ou plusieurs segments de liaison par correspondance géométrique (200, 202, 204) décalés les uns des autres dans le sens de la longueur sont prévus pour assurer la liaison en correspondance géométrique d'une première partie (197) et d'une deuxième partie (199) du corps de rotation.

14. Dispositif selon les revendications 1 à 13, **caractérisé en ce que** l'élément de rotation (125) est repoussé contre une butée (139) par un moyen élastique (145) et **en ce que** la butée (139) transfère à l'élément de rotation (125) un déplacement de rotation de l'arbre (105).

15. Installation industrielle de séchage, de nettoyage et/ou de peinture dotée d'un dispositif selon l'une des revendications 1 à 14 comme dispositif de transport (1) assurant le déplacement de carrosseries de véhicules.
